# EUROPEAN PATENT APPLICATION

(11) **EP 3 355 008 A1**
(43) Date of publication of application: **01.08.2018**
(21) Application number: 17154067.7
(22) Date of filing: 31.01.2017
(51) Int. Cl.: F25D 19/00, B60P 3/20

(54) **DOLLY FOR CARRYING CARGO**

(71) Applicant: Etihad Airways, Abu Dhabi (AE)
(72) Inventor: Olivera Brizzio, Pablo, Al Ghadeer Abu Dhabi (AE); Fakhri, Anas, Abi Dhabi (AE); El Khatib, Sameh T., Abu Dhabi (AE)
(74) Representative: Spencer, James Michael

(57) **Abstract**

A dolly for carrying temperature sensitive cargo, the dolly comprising: a chassis having at least one electric power source receiving portion for receiving an electric power source; a cargo box supported on the chassis, the cargo box comprising a storage volume configured to hold cargo; and an electric temperature control system configured to control the temperature of the storage volume, the electric temperature control system being configured to be electrically connected to an electrical power source received in an electrical power source receiving portion of the chassis.

## Description

### TECHNICAL FIELD

The present invention relates to a dolly for carrying cargo, and more specifically to a dolly for carrying cargo at a controlled temperature.

### BACKGROUND

Air cargo is often moved between different environments during transit, such as between storage facilities, the tarmac or apron of airports and aircraft holds. The temperature in each of the environments can vary considerably, which can have an adverse effect on cargo that is sensitive to changes in temperature. Temperature sensitive cargo includes a broad range of goods, such as certain pharmaceuticals, non-preserved foods and fresh cut flowers, and other types of cargo, such as live animals (AVI goods). Different types of temperature sensitive cargo may be required to be kept at different temperatures, or within different temperature ranges, during transit.

Various systems and methods for transporting temperature sensitive air cargo within desired temperature ranges are known in the art.

Air cargo is typically containerised in containers or pallets of standard external shapes and sizes. The standardised containers and pallets are often referred to as Unit Load Devices (ULDs). The standard external shapes and sizes of ULDs are generally dictated by the designs of aircraft holds. One known type of system for controlling the temperature of air cargo during transit comprises installing temperature control systems, such as refrigeration units and electric heaters, in individual cargo containers. These temperature control systems generally monitor cargo temperature in the container and operate when needed to keep the cargo within a desired temperature range. These types of systems are referred to herein as active container systems.

Known active container systems have certain drawbacks. In particular, the temperature control systems installed in the individual containers are generally required to be housed inside the container, since the external shapes and sizes of air cargo ULDs are generally fixed, and as such, the volume of storage space available for cargo inside a container with an active temperature control system is reduced by the temperature control system components. In addition, known active container systems are typically expensive to install, increase the unloaded weight of a container and often have limited periods of continuous operation before requiring servicing or recharging.

Some of the environments that air cargo is exposed to during transit may have temperature control systems for controlling the temperature of the environment. For example, aircraft holds and storage facilities often comprise temperature control systems. Accordingly, in some cases, temperature sensitive air cargo may only be exposed to environments with uncontrolled temperatures for relatively short periods of time during transit, such as when the cargo is moved between an aircraft hold and a storage facility. In these cases, active temperature control systems in a container may be unnecessary or redundant for significant periods of time during transit, when the cargo is held in a temperature controlled environment.

Another type of system for controlling the temperature of air cargo during transit comprises minimising heat transfer between the cargo stored in a container and the external environment. These systems generally comprise surrounding cargo or containers with thermally insulating and pre-cooled blankets, and in some cases, packing cold substances, such as dry ice or liquid nitrogen, with the cargo. These types of systems are referred to herein as passive systems.

Known passive systems also have certain drawbacks. In particular, known passive systems typically rely on relatively short transit times between temperature controlled environments. The effectiveness of passive systems may also depend on the temperature difference between the cargo and the external environment. For example, passive systems used with cold cargo may work less effectively, or for a shorter period of time, in a hot climate comparted to a cold climate. Consequently, known passive systems may not be suitable for use in airports without cold storage facilities close to the apron or tarmac. Some passive systems also require potentially harmful substances, such as dry ice, to be stored in close proximity to cargo. The potentially harmful substances may be volatile and may endanger operators if not handled correctly. The potentially harmful substances may also not be appropriate for storage with some temperature sensitive cargo, which may be damaged or contaminated by the potentially harmful substances.

Transport of air cargo between aircraft holds and storage facilities is typically carried out using ground handling equipment (GHE), such as dollies. Recently, there have been proposals for adapting GHE, such as dollies, to include temperature control systems. Dollies having temperature control systems may receive temperature sensitive goods as they are offloaded from an aircraft hold and may hold the cargo until the cargo arrives at another temperature controlled environment. GHE having temperature control systems may be used in conjunction with or instead of passive systems. This may reduce or eliminate the need to apply bulky insulation materials around ULDs when loading and off-loading temperature sensitive cargo from an aircraft hold. This may also reduce or eliminate the need for potentially hazardous cold materials to be packed with air cargo. Dollies having temperature control systems may enable cargo to be moved between temperature controlled environments at every stage of transit. This is sometimes referred to as providing an unbroken "cold chain".

The current proposed dollies offering temperature controlled storage environments also have a number of drawbacks. Generally, the proposed dollies require diesel generators for running the cooling systems. Such diesel generators are often noisy and polluting in operation, which can prohibit the use of the dollies indoors and is generally environmentally unsustainable. Some proposed dollies also comprise backup electric cooling systems; however, such backup electric cooling systems typically either require an external power source, such as mains power, or offer very limited battery powered operation. Generally, the cooling systems, including the diesel generators, electrical systems, fuel systems and power supplies, are arranged at the side of the dolly or the cargo box of the dolly. In other words, the cooling systems are arranged as an extension at the side of the dolly, increasing the length or the width of the dolly. As a result, the proposed dollies with temperature control systems have a larger footprint than the conventional dollies without temperature control systems. This increase in size results in fewer of the proposed dollies with temperature control systems being able to be used in areas of limited size.

There is an opportunity to improve the design of cargo dollies comprising temperature control systems. It would be desirable to provide a cargo dolly that can provide a temperature controlled environment, independently, for extended periods of time. It would be desirable to provide a cargo dolly that can provide a temperature controlled environment, independently, overnight. It would be desirable to provide an environmentally sustainable dolly that is suitable for use both indoors and outdoors.

### SUMMARY OF INVENTION

According to a first aspect of the present invention, there is provided a dolly for carrying temperature sensitive cargo, the dolly comprising: a chassis having at least one electric power source receiving portion for receiving an electric power source; a cargo box supported on the chassis, the cargo box comprising a storage volume configured to hold cargo; and an electric temperature control system configured to control the temperature of the storage volume, the electric temperature control system being configured to be electrically connected to an electrical power source received in the electrical power source receiving portion of the chassis.

The dolly of the present invention provides a temperature control system that is powered entirely by electricity. By providing the dolly of the present invention with an electric temperature control system, the dolly of the present invention comprises means for controlling the temperature of cargo held in the storage box that may not emit exhaust polluting or harmful exhaust gases during operation. Accordingly, the dolly of the present invention may be suitable to be operated indoors and may be environmentally sustainable.

By providing the dolly of the present invention with at least one electric power source receiving portion, the dolly of the present invention may also be provided with at least one electric power source, such as an electric battery, which may enable the electric temperature control system of the dolly to operate independently of an external electric power source, such as mains power.

By arranging at least one electric power source receiving portion in the chassis, the present invention enables at least one electric power source to be embedded in the chassis. This may enable the dolly to be provided with an electric power source without requiring the length or the width of the dolly to be increased to accommodate the electric power source.

The chassis has a length and a width. The length and the width of the chassis may define the footprint of the chassis. The chassis may be any suitable size. The chassis may have any suitable length and width. The length and width of the chassis may be dependent on the typical size of the cargo to be held in the cargo box. The chassis may have a length of between about 2 m and about 5 m, and the chassis may have a width of between about 1 m and about 4 m. In a preferred embodiment, the chassis has a length of about 3.63 m and a width of about 2.88 m.

Preferably, the cargo box extends substantially the length and the width of the chassis. In other words, the footprint of the cargo box may be substantially equal to the footprint of the chassis. The length and width of the storage box may be substantially equal to the length and width of the chassis. The cargo box may have any suitable external dimensions. The cargo box may have a length of between about 2 m and about 5 m, and the cargo box may have a width of between about 1 m and about 4 m. In a preferred embodiment, the cargo box may have a length of about 3.62 m and a width of about 2.85 m. The cargo box may also have an external height of between about 1 m and about 4 m. In a preferred embodiment, the cargo box has a height of about 2.34 m.

The storage volume of the cargo box may be sized and shaped to hold a standard air container or ULD. In some embodiments, the storage volume of the cargo box may have substantially the same size and shape as a standard air container or ULD. In these embodiments, the length and width of the cargo box may be similar to, or only slightly larger than, the length and the width of the container or ULD. A ULD may have a length between about 1 m and about 5 m and a width of between about 1 m and about 4 m. A preferred ULD may have a length of about 3.175 m and a width of about 2.438 m. A ULD may have a height of between about 1 m and about 4 m. However, the height of a ULD may typically depend on the type of ULD, for example, whether the ULD is adapted for storage on a lower deck of an aircraft hold or whether a ULD is adapted for storage on a main deck of a aircraft hold. A preferred ULD adapted for storage on a lower deck of an aircraft hold may have a maximum height of about 1.626 m and a preferred ULD adapted for storage on an upper deck of an aircraft hold may have a maximum height of about 2.997 m. The storage volume of the cargo box may be substantially the same size, or slightly greater than, the size of a typical ULD.

In preferred embodiments, the cargo box is supported on the chassis above the at least one electric power source receiving portion. In other words, the cargo box may extend over the top of the one or more electric power source receiving portions of the chassis. By arranging the one or more electric power source receiving portions below the cargo box, the cargo box is not required to be adapted to accommodate the one or more electric power sources. In particular, the external size of the cargo box is not required to be increased to accommodate the one or more electric power sources and the internal size of the storage volume is not required to be reduced to accommodate the one or more electric power sources.

The chassis may be any suitable type of chassis. Preferably, the chassis is a flatbed chassis. In other words, preferably the chassis comprises a substantially flat or planar load carrying area. The cargo box may be supported on the substantially flat or planar load carrying area of the chassis.

The chassis may be any suitable shape. Typically, the chassis forms a generally rectangular shape. In other words, typically the footprint of the chassis is substantially rectangular. Preferably, the chassis is also thin. In other words, the height of the chassis is substantially less than the length or the width of the chassis.

Preferably, the chassis comprises a frame. The frame may be made of any suitable material. For example, the chassis frame may be made from a metal or a metal alloy, such as mild or stainless steel or aluminium. Preferably, the chassis frame is made from galvanized commercial grade steel.

The chassis frame may be formed from a plurality of frame members. In preferred embodiments, the frame members may be formed any suitable combination of metal bars, angle sections, U-sections and I-beams. The frame members may be arranged in any suitable shape and secured together to form a substantially rigid frame. Where the frame members are metal frame members, the frame members may be welded together.

The chassis may comprise any suitable number of electric power source receiving portions. For example, the chassis may comprise between one and ten electric power source receiving portions.

The one or more electric power source receiving portions may be any suitable size and shape. Each electric power source receiving portion may be configured to receive an electric power source. Preferably, each electric power source receiving portion forms a recess or a cavity in the chassis. Typically the recess or cavity is sized and shaped to accommodate an electric power source. Each electric power source receiving portion may comprises a substantially cuboid space or volume.

The one or more electric power source receiving portions may be arranged at any suitable position in the chassis. Typically, the one or more electric power source receiving portions are arranged around the edges or the circumference of the chassis. Arranging the electric power source receiving portions around the edges of the chassis may facilitate access to electric power sources received in the electric power source receiving portions from the sides of the dolly. This may make inserting electric power sources into the electric power source receiving portions straightforward.

Where the chassis comprises two or more electric power source receiving portions, some of the electric power source receiving portions may be arranged at a first side of the chassis and some of the electric power source receiving portions may be arranged at a second side of the chassis, opposite the first side.

In particularly preferred embodiments, the chassis comprises two electric power source receiving portions, a first electric power source receiving portion at a first side of the chassis, and a second power source receiving portion at a second side of the chassis, opposite the first side. Where the chassis has a substantially rectangular footprint and comprises two electric power source receiving portions arranged at opposite sides of the chassis, the chassis may generally form an H-shape.

The dolly may further comprise one or more electric power sources. Each electric power source may be received in an electric power source receiving portion of the chassis. Preferably, each electric power source is removably receivable in an electric power source receiving portion of the chassis. As used herein, 'removably receivable' refers to the electric power sources being able to be removed from the electric power source receiving portions without damaging the electric power source.

The dolly may comprise one electric power source receiving portion and one electric power source received in the electric power source receiving portion. However, in preferred embodiments, the dolly comprises two electrical power source receiving portions, a first electric power source receiving portion at a first side of the chassis and a second power source receiving portion at a second side of the chassis, opposite the first side, and two electric power sources, a first electrical power source received in the first electric power source receiving portion and a second electric power source received in the second electric power source receiving portion.

The one or more electric power sources may comprise any suitable electric power sources. Preferably, each electric power source is a DC electric power source, such as an electric battery. The electric power source may be any suitable type of electric battery. For example, the battery may be an Absorbed Glass Mat (AGM) battery or a Lithium-ion battery. Typically, the battery is a deep-cycle battery.

Preferably, each electric power source comprises a plurality of batteries. Each electric power source may comprise any suitable number of batteries. For example, each electric power source may comprise between two and ten batteries. In a preferred embodiment, each electric power source comprises eight batteries. The batteries may be any suitable type of batteries. For example, the batteries may be Absorbed Glass Mat (AGM) batteries or Lithium-ion batteries. The batteries may have any suitable characteristics. Each battery may provide any suitable voltage. For example, each battery may provide about 3.2 V, about 6 V or about 12 V.

The plurality of batteries may be connected together in an array. The plurality of batteries may be connected together to provide a single electric power source. The batteries may be connected together in any suitable arrangement. The main constraint on the type, size and number of batteries is the size of the electric power source receiving portions of the chassis.

Each electrical power source may have any suitable capacity. For example, each electric power source may have a capacity between about 600 Ah and about 1000 Ah, preferably between about 610 Ah and about 800 Ah.

Each electric power source may be capable of supplying any suitable voltage to the temperature control system. Preferably, each electric power source is capable of supplying a voltage of about 24 V to the temperature control system.

Where the electric power sources are comprised of a plurality of batteries, the number and specification of the batteries may be chosen to suit the operating specifications of the dolly. In particular, the number and specification of batteries are chosen to enable the dolly to operate continuously and independently of other, external electrical power sources for a period of at least eight hours. As such, the electrical power sources may be chosen to enable the dolly to operate continuously and independently overnight. The maximum continuous operating time of each electrical power source may be about 16 hours, but preferably each electrical power source may be used continuously for no more than about 8 hours to prolong the life of the electrical power source.

Each electric power source may be sized and shaped to be received in an electric power source receiving portion of the chassis. Each electric power source receiving portion may be sized and shaped to receive one electric power source. As such, the number of electric power source receiving portions provided in the chassis may dictate the maximum number of electric power sources able to be supported by the chassis.

Each electric power source may be sized and shaped to fit within an electric power source receiving portion of the chassis. In other words, each electric power source may be sized and shaped to be embedded in the chassis when the electric power source is received in an electric power source receiving portion of the chassis.

The size and shape of the electric power source receiving portions of the chassis may be the main constraint on the characteristics of the electric power sources used with the dolly. Preferably, each electric power source substantially forms a cube having a length of about 1000 mm, a width of about 900 mm and a height of about 200 mm.

In preferred embodiments, the chassis comprises two or more electric power source receiving portions and two or more electric power sources. Each electric power source may be removably received in one of the electric power source receiving portions. In these preferred embodiments, each electric power source may be removed from the chassis and replaced with another electric power source whilst the temperature control system is in operation. In other words, the electric power sources may be hot swappable. This may enable the temperature control system to operate continuously whilst one of the electric power sources is removed and replaced. This may also enable the temperature control system to operate continuously if one of the electric power sources fails or runs out of charge.

Where the chassis comprises more than one electric power source, preferably all of the electric power sources are identical. Similarly, where the dolly comprises more than one electric power source receiving portion, preferably each electric power source receiving portion is identical. By providing identical electric power sources and identical electrical power source receiving portions, the electric power sources may be interchangeable between the electric power source receiving portions of the dolly. In addition, the electric power sources may be interchangeable with electric power sources of other similar dollies. Where multiple dollies of the present invention are used together on site, electrical power sources may be moved between the dollies where needed.

Preferably, each electric power source is removable laterally from the chassis. In other words, preferably each electric power source is removable horizontally from the chassis. This may facilitate removal of the electric power sources from the chassis. In particular, lateral removal of the electric power sources may not require the dolly to be lifted to remove the electric power sources. This may further facilitate continuous operation of the dolly whilst one or more of the electric power sources is being replaced.

Where the dolly comprises a first electric power source at a first side of the chassis and a second electric power source at a second side of the chassis, opposite the first side, the first electric power source may be removable laterally from the first side of the chassis and the second electric power source may be removable laterally from the second side of the chassis.

In preferred embodiments, the dolly may comprise two electrical power sources, a first electrical power source removably received in the first electric power source receiving portion of the chassis and a second electric power source removably received in the second electric power source receiving portion of the chassis, the first electrical power source being removable laterally from the first side of the chassis and the second electrical power source being removable laterally from the second side of the chassis.

Each electric power source may be carried in frame or a structure that is removably receivable in an electric power source receiving portion of the chassis. Providing each electric power source in a frame or a structure may protect the electric power sources from impacts and from the external environment.

In preferred embodiments, each electric power source is received in a drawer that is slideably receivable in an electric power source receiving portion of the chassis. Preferably, each drawer is removable laterally from a side of the chassis.

Each drawer may comprise a base and sidewalls defining a storage volume for holding an electric power source. The storage volume may be open at the top to provide access to the electric power source.

Each electric power source receiving portion of the chassis may be configured to receive a drawer. In some embodiments, the sides of each electric power source receiving portion may comprise runners or rollers for slideably supporting a drawer. In some embodiments, the end of each electric power source receiving portion may comprise one or more resilient members, such as springs, to bias a drawer received in the electric power source receiving portion out of the fully received position in the electric power source receiving portion. In some embodiments, the chassis may be provided with means to retain a drawer within an electric power source receiving portion. For example, slideable bolts may be provided on opposite sides of an electric power source receiving portion of the chassis, for sliding in front of a drawer when the drawer is fully received in the electric power source receiving portion to retain the drawer in the electric power source receiving portion.

Preferably, when a drawer is fully received in an electric power source receiving portion of the chassis, an external face of the drawer may be flush with a side of the chassis.

Each drawer may comprise a handle. The handle may be arranged at an external face of the drawer when the drawer is received in the chassis, such that the handle may be accessible when the drawer is fully received in the chassis.

Each drawer may comprise an aperture for receiving a connector for connecting the electric power source held in the drawer to the temperature control system of the dolly.

The dolly further comprises a cargo box supported on the chassis. The cargo box may comprise a housing defining an enclosure or storage volume for holding or storing cargo.

Generally, the cargo box comprises a floor, a roof, sidewalls extending between the floor and the roof and at least one door. The floor, roof, sidewalls and at least one door may define the storage volume.

In preferred embodiments, the floor is a conveyor floor. The floor may comprise a plurality of ball transfer units or rollers. The ball transfer units or rollers may be spaced at regular intervals across the floor to enable cargo to slide easily over the floor. The floor may also comprise a plurality of stoppers to accommodate a range of cargo, in a range of arrangements. For example, the floor may comprise stoppers arranged to enable two half size pallets to be securely arranged in the storage volume or one full size pallet to be securely arranged in the storage volume.

The floor of the cargo box may be secured directly to the chassis. For example, the floor of the cargo box may be welded directly to the chassis. However, preferably a bed is secured directly to the chassis and the floor of the cargo box is supported on the bed. The cargo box may be secured to the bed. The cargo box may be secured to the bed by any suitable means, such as by bonding. Typically, the bed comprises a metal sheet having a length and a width that is substantially similar to the length and the width of the chassis.

The roof, sidewalls and at least one door may be formed from any suitable material. Typically, the roof, sidewalls and at least one door are formed from substantially the same material. The roof, sidewalls and at least one door may be referred to collectively as panels.

The panels may comprise a durable wall or panel formed from metal, such as aluminium. The panels may also comprise thermal insulation. The thermal insulation may comprise any suitable material. For example, the thermal insulation may comprise polyurethane foam and wood, to provide additional structural reinforcement to the foam. Many other suitable types of thermal insulation are well known in the art. By providing appropriate thermal insulation, the cargo box may be able to maintain the inside temperature for several hours without operation of the electric temperature control system. This may enable the cargo box to protect temperature sensitive cargo for a period of time in the event of a failure of the electric temperature control system. The durable panel may be provided on the outside or exterior of the cargo box and the thermal insulation may be provided on an inside or interior of the cargo box. This may enable the durable panel to protect the thermal insulation from being damaged by the external environment and impacts.

The panels may be any suitable thickness. For example, the panels may be between about 8 cm thick and about 15 cm thick. The roof, sidewall and floor panels may all have the same thickness. However, typically the sidewall panels have a thickness of about 12 cm and the floor panels have a thickness of about 10 cm.

Typically, the panels are secured together. The panels may be secured together by any suitable means. For example, the panels may be secured together by cam locks.

The one or more doors may be any suitable type of door. For example, the one or more doors may be sliding doors. However, preferably the one or more doors are hinged doors. The hinges securing the one or more hinged doors to the door frames may be any suitable type of hinges. Preferably, the hinges enable the one or more doors to be opened to an angle of about 270 degrees from the closed position.

The one or more doors may be lockable. The one or more doors may comprise locks. The one or more doors may comprise locks for locking the doors in an open position, to prevent the one or more doors from swinging when open, such as in windy weather. The one or more doors may also be lockable together in the closed position to secure cargo in the storage volume of the cargo box.

Preferably the cargo box comprises at least two doors, a first door at a first side of the cargo box and a second door at a second side of the cargo box, opposite the first side.

The cargo box may have a pair of doors, or a double door, at each side of the cargo box. Providing doors at opposite sides of the cargo box my facilitate loading and unloading of the cargo box from different sides. The electric power source receiving portions of the chassis may be arranged at the same sides of the dolly as the doors in the cargo box.

The dolly comprises an electric temperature control system configured to control the temperature of the storage volume. The electric temperature control system may be capable of controlling the temperature of the storage volume between about -5 degrees Celsius and about 40 degrees Celsius, or preferably between about 2 degrees Celsius and about 25 degrees Celsius. The electric temperature control system may be configured to operate in external environments having ambient temperatures of up to about 50°C or about 60°C. This may enable the dolly to operate in more extreme external environments than other temperature control systems, which typically are configured to operate in external environments having ambient temperatures of up to about 35°C.

Electrical power is supplied to the temperature control system from an electric power source received in the chassis of the dolly. The temperature control system may be electrically connected to electrical power sources received in the chassis through electrical wires embedded in tracks in the chassis. Electrical wires may also be embedded in the side panels of the cargo box. Electrical connectors may be provided between the electrical power sources and the wires of the temperature control system. The electrical connectors may enable the electrical power sources to be disconnected from the temperature control system.

The electric temperature control system may comprise at least one electric cooling device arranged on the roof of the cargo box. The at least one electric cooling device may be configured to be electrically connected to an electrical power source received in an electrical power source receiving portion of the chassis.

By arranging the one or more electric cooling devices on the roof of the cargo box, the cargo box is provided with a temperature control device without requiring the length and the width of the cargo box to be increased to accommodate the temperature control device.

Accordingly, in preferred embodiments, the cargo box is arranged above the electric power source receiving portions of the chassis and the temperature control system comprises at least one electric cooling device on the roof of the cargo box. In these preferred systems, the temperature control system and electric power supplies are arranged above and below the cargo box, respectively.

The temperature control system may comprise any suitable number of electric cooling devices. Preferably, the temperature control system comprises two or more electric cooling devices.

Preferably, the at least one electric cooling device comprises a cooling element. In some embodiments, the cooling element is an evaporator. In some embodiments, the cooling element is a thermoelectric device, such as a Peltier device. Some electric cooling devices may comprise more than one cooling element. Some electric cooling devices may comprise both thermoelectric devices and evaporators.

In some embodiments, the cooling elements may be provided alone in the electric cooling devices. However, preferably, the at least one electric cooling device further comprises a fan. The fan may be directed to blow air over the cooling element and into the storage volume of the cargo box.

In some embodiments, the at least one electric cooling device comprises a refrigerant circuit. The refrigerant circuit may comprise an evaporator, a condenser, a compressor and an expansion device connected together in a circuit.

In some embodiment, the electric cooling devices may be configured to provide cooling. In some embodiments, the electric cooling devices may be configured to provide cooling and heating. In preferred embodiments, the cooling devices are configured to provide both cooling and heating.

In embodiments where the cooling devices are configured to provide heating, the cooling devices may comprise one or more heating elements. However, in some embodiments, the one or more cooling elements may be configured to operate as a cooling element and heating element.

In some embodiments, the electric temperature control system may further comprise control electronics. The control electronics may be configured to control the supply of power to the at least one electric cooling device from an electric power source received in an electric power source receiving portion of the chassis. Preferably, the control electronics are arranged at a side wall of the cargo box. Arranging the control electronics at a side wall of the cargo box may enable a user to easily access the control electronics.

The control electronics may comprise one or more user interfaces. The one or more user interfaces may display information about the storage volume of the cargo box, such as the current temperature of the storage volume. The one or more user interfaces may also display information about the electric power sources received in the electric power source receiving portions of the chassis. For example, the user interfaces may display information about the level of charge of the electric power sources, the current used and the duration of operation of the electric power sources. This may provide a user with important information about the temperature exposure of cargo inside the cargo box and information about the maintenance schedule for the electric power sources.

In some embodiments, the one or more user interfaces may enable a user to control the temperature of the storage volume. The one or more user interfaces may enable a user to control the electrical power supplied to the one or more electric cooling devices. The one or more user interfaces may enable a user to set a desired temperature of the storage volume and the control electronics may be configured to operate the one or more electric cooling devices to achieve the desired temperature.

The control electronics may further comprise connection means for connecting the temperature control system to an external electrical power source, such as a mains power source. The connection means may be in the form of a plug or a socket for receiving a plug. The connection means may be provided at any suitable location on the dolly. For example, a socket may be provided in the chassis, below the user interface.

The control electronics may be configured to enable power to be supplied from an external electrical power source to the temperature control system. Connection of the temperature control system to an external electrical power source may enable the temperature control system to be supplied with power from an external electrical power source, rather than from an electrical power source received in the one or more electrical power source receiving portions of the chassis.

In particular, the control electronics may be configured to supply power to the electric temperature control system from an external electrical power source in an initial, pre-cooling stage, before temperature sensitive cargo is loaded into the storage volume. The initial pre-cooling stage may reduce the temperature of the storage volume from about the external ambient temperature to about the required temperature for the temperature sensitive cargo. Such a pre-cooling stage may reduce the amount of work that the temperature control system is required to perform when power is supplied to the temperature control system from electrical power sources received in the electrical power source receiving portions only. This may significantly increase the length of time for which the temperature control system may bed operated independently of an external electrical power source, when power is supplied to the temperature control system from electrical power sources received in the electrical power source receiving portions of the chassis only.

The control electronics may also be configured to enable power to be supplied from an external electrical power source connected to the temperature control system to one or more electrical power sources received in the one or more electrical power source receiving portions of the chassis. This may enable electrical power sources received in the chassis to be charged by an external power source connected to the connection means.

In some embodiments, the one or more electric power sources may be removed from the chassis and transferred to a charging unit, for charging the electric power sources from an external electrical power supply. In some embodiments, the electric power sources may be electrically connected to the temperature control system of the dolly whilst received in the charging unit. In other words, the electric power sources may be electrically connected to the temperature control system when the electric power sources are not received in the chassis of the dolly. The control electronics may be configured to operate the temperature control system in a pre-cooling stage, with power being supplied to the temperature control system from the electric power sources when the electric power sources are being charged in a charging unit.

The electric temperature control system may further comprises one or more door sensors arranged to sense whether a door of the cargo box is open or closed.

The electric temperature control system may further comprise one or more temperature sensors arranged to sense the temperature of the storage volume.

In some embodiments, the control electronics may be configured to compare measurements of temperature sensed by the one or more temperature sensors to a threshold temperature value. The control electronics may be further configured to control the supply of power to the at least one electric cooling device based on the comparison.

In some embodiments, the control electronics may be configured to supply power to the at least one electric cooling device if the temperature sensed by the temperature sensors is above the threshold temperature value. In some embodiments, the control electronics may be configured to increase the supply of power to the at least one electric cooling device if the temperature sensed by the temperature sensors is above the threshold temperature value.

Preferably, the temperature control system comprises at least two electric cooling devices arranged on the roof of the cargo box.

In some embodiments having at least two cooling devices, the control electronics may be configured to operate each electric cooling device independently. In other words, the control electronics may be configured to operate a first one of the cooling devices independently of a second cooling devices. In preferred embodiments, the control electronics may be configured to operate a first one of the electric cooling devices as a main electric cooling device and a second one of the electric cooling devices as a secondary electric cooling device. Put in another way, the control electronics may be configured to generally operate a first one of the cooling devices in a normal operation mode, and to temporarily operate both the first and second cooling devices in certain temporary operation modes. In the normal operation mode, the temperature of the storage volume may be around the desired temperature and the temperature control system may be required to maintain the temperature of the storage volume at around the desired temperature. One cooling device may be sufficient to maintain the temperature of the storage volume at around its current temperature. However, in an exemplary temporary operation mode, the temperature of the storage volume may be significantly higher than the desired temperature, and the temperature control system may be required to cool the storage volume by a significant amount. Significant cooling of the storage volume may require two cooling devices. In another exemplary temporary operation mode, one or more doors of the cargo box may be open and the temperature control system may be required to prevent or inhibit the temperature of the storage volume from increasing by a significant amount due to the ingress of warm external ambient air into the storage volume.

In some embodiments having at least two electric cooling devices, the cooling devices may comprise a first cooling device arranged at the first side of the cargo box and a second cooling device arranged at the second side of the cargo box. In some preferred embodiments, the cargo box comprises at least two doors, a first door arranged at the first side of the cargo box and a second door arranged at the second side of the cargo box. In these preferred embodiments, the first cooling device may comprise a fan arranged to direct cold air towards the second door at the second side of the cargo box. In these preferred embodiments, the second cooling device may comprise a fan arranged to direct cold air towards the first door at the first side of the cargo box. In these preferred embodiments, the temperature control system may be configured to: detect when the first door is opened and operate the second cooling device when the first door is opened to direct cold air towards the open first door, and detect when the second door is opened and operate the first cooling device when the second door is opened to direct cold air towards the open second door.

In other preferred embodiments, the first cooling device may comprise a fan arranged to direct cold air substantially downwards towards the floor and the second cooling device may comprise a fan arranged to direct cold air substantially downwards towards the floor. In these other preferred embodiments, the temperature control system may be configured to detect when the first door is opened and operate the first cooling device when the first door is opened to direct cold air downwards towards the floor to generate a curtain of cold air adjacent the open first door, and detect when the second door is opened and operate the second cooling device when the second door is opened to direct cold air downwards towards the floor to generate a curtain of cold air adjacent the open second door.

Typically, the chassis is supported on a plurality of wheels. In other words, the chassis may form a bogie or an undercarriage. Any suitable number of wheels may be provided. The chassis may be supported on between two and twenty wheels, and preferably between four and twelve wheels.

The wheels may be arranged in any suitable arrangement. Where the chassis comprises corners, preferably the wheels are arranged at the corners of the chassis. In preferred embodiments, the chassis is substantially rectangular and comprises wheels at each of the four corners. The chassis may be substantially rectangular and a pair of wheels may be arranged at each corner of the chassis.

The wheels may be any suitable types of wheels. Preferably, the wheels are caster wheels. Each caster wheel may comprise a tyre. The tyre may be made from any suitable material. Preferably, the tyre is made from pressed rubber. Each caster wheel may further comprise hubs and bearings to enable the caster wheel to rotate on two axes, to provide movement and steering to the dolly. Preferably, the caster wheels are provided in pairs rotatably mounted to the chassis on a single mounting.

In preferred embodiments, the chassis is substantially rectangular and comprises four pairs of caster wheels, one pair of caster wheels at each corner of the chassis. Each wheel may have a tyre formed from pressed rubber, having an outer diameter of about 26 cm. Preferably the wheels are designed to support loads of up to 20 tons and to operate safely at speeds of up to 25 km/h.

Preferably, the pairs of caster wheels at the front of the chassis may be configured to rotate on two axes, to provide movement and steering to the dolly, and the caster wheels at the back of the chassis may be configured to rotate on one axis, to provide movement to the chassis, without providing steering. This may enable a brake system to be applied to the back wheels, as described in more detail later on.

The wheels may be required to support the chassis at a particular height off the ground or the surface on which the dolly rests. Preferably, the wheels raise the chassis off the surface on which the dolly rests by at least 508 mm. Supporting the chassis off the ground by at least 508 mm may enable the dolly to be used with existing, standardised GHE. Where the dolly is required to support the chassis at a particular height off the ground, it may be necessary to design the wheels to support cargo loads in the cargo box without deforming or squishing so that the height of the chassis off the ground does not lower under load.

The dolly may further comprise a brake system, the brake system being engagable with at least one of the plurality of wheels for inhibiting movement of the wheel.

The brake system of the dolly may comprise a transverse member having brake arms at both ends. The transverse member may extend between the back wheels of the chassis such that each brake arm is aligned with one of the back wheels. The transverse member may be rotatably mounted to the chassis such that rotation of the transverse member in one direction may move the brake arms into contact with the back wheels to provide braking to the back wheels and rotation of the transverse member in the opposite direction may move the brake arms out of contact with the back wheels to enable the back wheels to rotate freely. As such, the brake system may form a top lock brake system, wherein the brake arms of the transverse member are brought into contact with the tyres, and in particular the tread of the tyres, to provide braking to the back wheels.

The brake system may be operated by a lever arm at the front of the dolly. The lever arm may be rotatably coupled to the chassis. The lever arm may be configured to apply the brakes to the back wheels when the lever is rotated or pulled upwards, towards the vertical, and to release the brakes from the wheels when the lever is rotated or pulled downwards, towards the horizontal. This may release the brakes when the lever arm is pulled away from the dolly, such as when the dolly is being towed forwards, and may apply the brakes to the wheels when a force is applied on the lever arm towards the dolly, such as when a vehicle towing the dolly brakes.

The lever arm may be connected to the transverse member and the brake arms via a longitudinal member extending between the lever arm and the transverse member. The longitudinal member may extend in a direction substantially perpendicular to the transverse member. The longitudinal member may be rotatably connected at one end to a central portion of the transverse member, between the brake arms. The longitudinal member may be rotatably connected to the lever arm at the other, opposite end. The longitudinal member may be arranged such that translation of the longitudinal member causes rotation of the transverse member. In particular, translation of the longitudinal member in one direction may cause rotation in the transverse member in the direction to release the brakes, and translation of the longitudinal member in the other, opposite direction may cause rotation in the transverse member in the direction to apply the brakes. The longitudinal member may also be arranged such that rotation of the lever arm causes translation of the longitudinal member. Accordingly, rotation of the lever arm may cause rotation of the transverse member, via translation of the longitudinal member.

The lever arm, longitudinal member and transverse member may be arranged such that pulling up on the distal end of the lever arm causes the brake arms to rotate into contact with back wheels, applying the brakes. The lever arm, longitudinal member and transverse member may also be arranged such that pulling down on the distal end of the lever arm causes the brake arms to rotate out of contact with back wheels, releasing the brakes.

The longitudinal member may be resilient. The resilient longitudinal member may be compressed when the brakes are applied and extended when the brakes are released. In other words, the length of the resilient longitudinal member may be reduced when the brakes are applied and may be extended with the brakes are released. The resilient longitudinal member may be biased into the extended configuration. Such a resilient longitudinal member may bias the lever arm into the vertical or braking orientation. As such, the resilient longitudinal member may urge the brake arms into contact with the back wheels unless a downward force is applied to the lever arm to release the brakes. This may substantially prevent or inhibit the dolly from rolling when the dolly is unattended.

The lever arm may be releasably connected to the chassis and the longitudinal member. The resilient longitudinal member may apply the brakes until the lever arm is reattached and a force is applied to the lever arm to release the brakes.

This type of braking system is straightforward to operate and automatically provides braking to the back wheels by default, for safety. This type of braking system enables the dolly to maintain a degree of steering, via the front wheels, whilst the braking system is applied. This type of braking system is also lightweight and has relatively few components.

In another aspect of the present invention, there is provided a dolly for carrying cargo, the dolly comprising: a chassis supported on a pair of wheels; and a brake system. The brake system comprises: a transverse member having brake arms at both ends, wherein the transverse member extends between the pair of wheels such that a brake arm is aligned with each wheel, and the transverse member is rotatably mounted to the chassis such that rotation of the transverse member in one direction moves the brake arms into contact with the wheels to provide braking to the wheels and rotation of the transverse member in the opposite direction moves the brake arms out of contact with the wheels to enable the wheels to rotate freely. The brake system may further comprise a lever arm rotatably coupled to the chassis and a longitudinal member rotationally coupled to the transverse member at one end and rotationally coupled to the lever arm at the other end. Rotation of the lever arm in a first direction may rotate the transverse member to bring the brake arms into contact with the wheels and rotation of the lever arm in a second direction may rotate the transverse member to move the brake arms out of contact with the wheels.

It will be appreciated that the dolly may be provided with a plurality of additional systems and features for providing further functionality to the dolly. A select few examples of such additional systems and features are provided below.

The chassis may comprise one or more couplers for connecting the dolly to another vehicle for towing. The one or more couples may be any suitable coupler. The one or more couplers may be tow bars or tow hitches. In particular, the one or more couples may be C-hitches, having a pin and a C-shaped jaw, or E-hitches, having a pin and an E-shaped jaw. Such hitches are generally well known in the art. In some embodiments, the one or more tow bars or tow hitches may be secured to the chassis. The one or more tow bars or tow hitches may be welded directly to the chassis. However, preferably the one or more tow bars or tow hitches may bolted to a weld plate that is welded to the chassis. In other embodiments, the one or more tow bars or tow hitches may be integrally formed with the chassis.

At least one external surface of the cargo box may be coated with a thermally insulating coating. This may reduce the external surface temperature of the cargo box. This may be particularly advantageous in environments with extreme temperatures or temperatures that are significantly different to the temperature of the stored cargo. As used herein, a 'thermally insulating coating' refers to a coating having a high degree of thermal reflectance or thermal reflectivity. In particular, a thermally insulating coating refers to a coating that reflects a high percentage of infrared radiation and ultraviolet radiation. As used herein, infrared radiation generally comprises electromagnetic radiation having a wavelength between about 700 nm to about 2500 nm. As used herein, ultraviolet radiation generally comprises electromagnetic radiation having a wavelength between about 10 nm to about 400 nm. As used herein, a high degree of thermal reflectance or thermal reflectivity is used to mean that the coating may reflect at least 70% of infrared and ultraviolet radiation incident on the coating, preferably reflects at least about 80% of infrared and ultraviolet radiation incident on the coating and ideally reflects at least about 90% of infrared and ultraviolet radiation incident on the coating.

In particular, at least one of the roof and the floor of the cargo box may be coated with a thermally insulating coating. Where one or more temperature control devices are arranged on the roof of the cargo box, the one or more temperature control devices may be coated with a thermally insulating coating. In some embodiments, all external surfaces of the cargo box may be coated with a thermally insulating coating. Where the dolly comprises a base plate between the chassis and the cargo box, an external surface of the base plate may be coated with a thermally insulating coating. An external surface of the chassis may be coated with a thermally insulating coating. In some embodiments, all external surfaces of the cargo dolly may be coated with a thermally insulating coating.

Coating the roof of the cargo box with the thermally insulating coating may enable the roof to reflect a significant proportion of the direct infrared and UV radiation, typically emitted from the sun, which is incident on the roof. Coating the floor of the cargo box, or the underside of the dolly, with the thermally insulating coating may enable the floor or underside to reflect a significant proportion of the indirect infrared and UV radiation, which has been reflected or emitted from the ground, that is incident on the floor of the cargo box or underside of the dolly. This may improve the efficiency of the thermally insulating panels of the cargo box. This may help to maintain the temperature of the cargo box regardless of the external ambient temperature.

As used herein, an 'external' surface of the cargo box or the dolly refers to a radially outer surface of the cargo box or the dolly. In other words, an 'external' surface of the cargo box refers to an outer surface of one of the floor, roof, sidewalls and doors and not to one of the inner surfaces defining the storage volume.

The thermally insulating coating may have a low thermal conductivity. As used herein, the term low thermal conductivity may refer to materials having a thermal conductivity below about 0.3 W.m⁻¹.K⁻¹, more preferably below about 0.2 W.m⁻¹.K⁻¹ and most preferably below about 0.1 W.m⁻¹.K⁻¹.

The thermally insulating coating may be any suitable thermally insulating coating.
The thermally insulating coating may be a polymer. The thermally insulating coating may be a thermally insulating paint. In some embodiments, a primer coating may be applied directly onto the surface of the cargo box or cargo dolly and the thermally insulating coating may be applied onto the primer coating. The provision of a primer coating may improve the adhesion of the thermally insulating coating on the surface of the cargo dolly.

Each door frame of the cargo box may comprise a defrost system to help release the doors when seized due to frosting. The defrost system may be any suitable system. Preferably, the defrost system comprises a plurality of heating wires embedded in the door frame. The temperature control system may be configured to supply power to the plurality of heating wires to defrost the door frames, when frosted, to release the doors.

An electric power source monitoring system may be provided with the temperature control system control electronics. The electric power source monitoring system may be configured to provide information about each electric power source, such as the voltage, state of charge, current consumption and expected remaining operating time.

Location sensors, such as GPS sensors, may be provided in the dolly to enable location tracking.

Identification sensors, such as RFID sensors, may be provided in the dolly to record and monitor cargo held in the cargo box.

Wireless communication systems, such as Wi-Fi or GSM systems may be provided in the dolly to enable remote location tracking and status monitoring of the dolly. The wireless communication systems may also enable remote control of the temperature control systems, and may enable the temperature of the cargo box to be controlled remotely.

Voice control systems may be provided in the dolly such that the temperature control system may be controlled by voice commands issued by a user. This may be particularly beneficial for dollies holding cold cargo, where users may be wearing gloves which may inhibit use of touch control systems.

One or more solar panels may be provided on the roof of the dolly for powering the temperature control system and for charging electric power sources. In some embodiments, the temperature control system may be powered entirely by power supplied from the solar panels.

In some embodiments, the cargo box may be adapted to accommodate live animals (AVI). The specific modifications may depend on the type of animal to be held in the cargo box.

It should be clear that features described in relation to one aspect of the invention may be applied to other aspects of the invention, either alone or in combination with other described aspects and features of the invention.

### BRIEF DESCRIPTION OF DRAWINGS

Embodiments of the invention will now be described in detail, with reference to the accompanying drawings, in which:
Figure 1 is an exploded view of a cargo dolly according to an embodiment of the present invention;
Figure 2 is an exploded view of the cargo dolly of Figure 1 comprising electric power sources in drawers that are slidably receivable in the chassis;
Figure 3 is an exploded view of the cargo box of the cargo dolly of Figure 1;
Figure 4 is a perspective view of the floor of the cargo box of Figure 3;
Figure 5 is a perspective view of a drawer for holding an electric power source of the cargo dolly of Figure 1;
Figure 6 is a perspective view of the drawer of Figure 5 including an electric power source;
Figure 7 is an exploded view of the drawer of Figure 5 and a forklift modified to carry the drawer;
Figure 8 is a perspective view of the drawer of Figure 5 supported on the forklift of figure 7; and
Figure 9 is a perspective view of the brake system of the cargo dolly of Figure 1.

### DETAILED DESCRIPTION

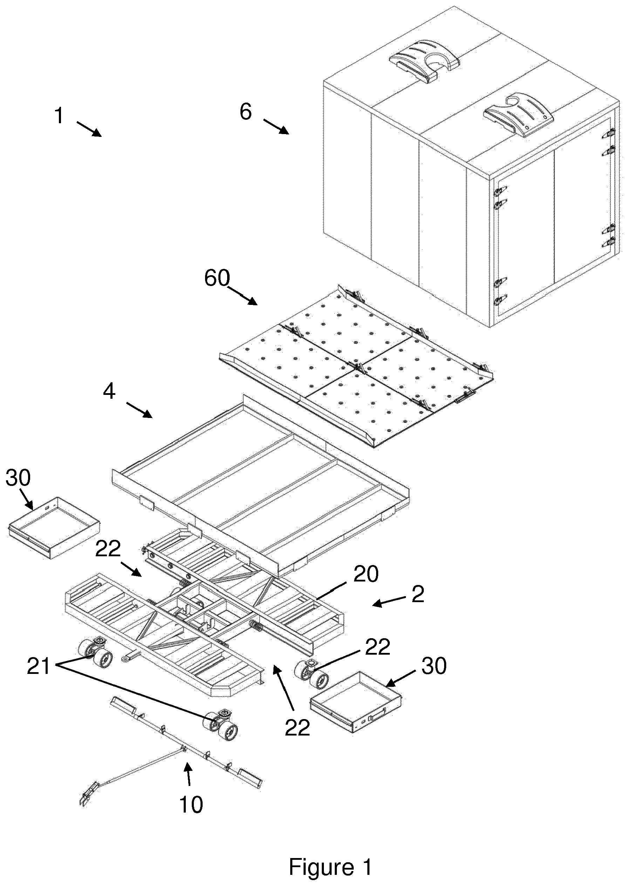

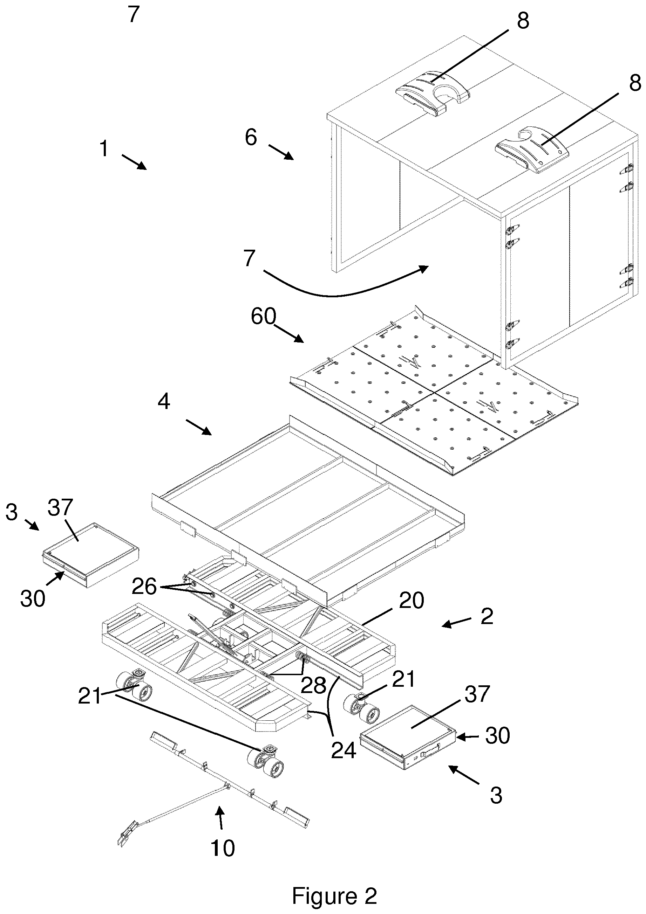

Figures 1 and 2 show a cargo dolly 1 according to a first embodiment of the present invention.

The cargo dolly 1 generally comprises a chassis 2, a pair of electric power sources 3 received in the chassis 2, a metal bed 4 extending substantially over the chassis 2 and a cargo box 6 secured to the metal bed 4 and supported by the chassis 2.

The cargo box 6 defines a storage volume 7 that is sized to fit a standard container for transporting air cargo. The cargo box 6 comprises a temperature control system 8 for monitoring and controlling the temperature of the storage volume 7. The electric power sources 3 are electrically connected to the temperature control system 8 and supply power to the temperature control system 8 to enable the temperature control system 8 to monitor and control the temperature of the storage volume 7.

The chassis 2 comprises a frame 20 formed from lengths of mild steel bar welded into a generally rectangular form. The chassis 2 forms a flat load-carrying area on which the cargo box 6 may be supported. In other words, the chassis 2 forms a flatbed chassis.

The frame 20 is supported on four pairs of wheels 21, one at each corner of the frame 20. As such, the chassis 2 forms a bogie or an undercarriage. In this embodiment, each wheel 21 comprises a caster wheels that has been configured to support a load of about 2.5 Tons. Since the wheels 21 are provided in pairs at the corners of the frame 20, each corner of the frame can support a load of about 5 Tons. In total, the wheels 21 can support a load of up to about 20 Tons spread across the frame. Although the wheels 21 and frame 20 can support loads of up to about 20 Tons, the dolly is typically limited to carrying loads of up to about 5 Tons. Each caster wheel 21 has an outer diameter of about 26 cm and comprises a solid tyre formed from pressured rubber in order to be able to support the maximum load without deforming (i.e. without being squashed). This means that the height of the frame 20 from the ground is not lowered as the cargo box 6 is loaded with cargo. The caster wheels 21 are supported on reinforced metal hubs and tampered steel bearings. The two pairs of caster wheels 21 at the front of the chassis 2 are rotatably mounted to the chassis 2, such that the front pairs of caster wheels 21 are free to rotate about a vertical axis, in order to provide a degree of steering for the dolly 1. The two pairs of caster wheels 21 at the back of the chassis 2 are not rotatably mounted to the chassis, such that the back pairs of caster wheels 21 do not provide steering. The caster wheels 21 are designed to withstand speeds of up to about 25 Km/h, which is significantly higher than the maximum speed of conventional dollies of about 13 Km/h.

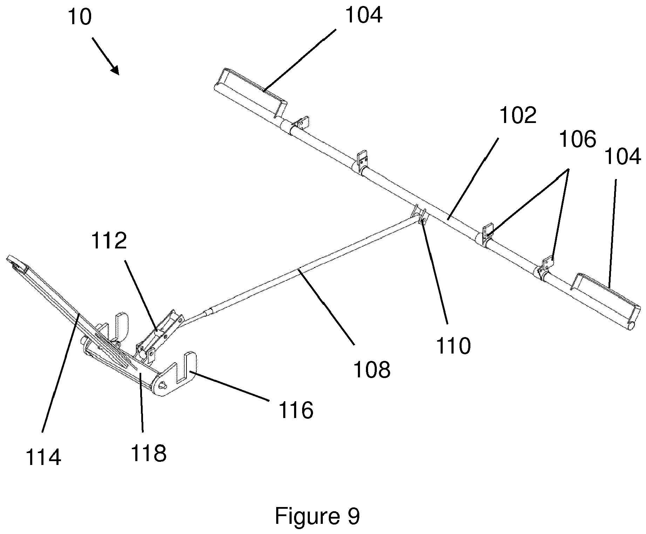

A brake system 10 is provided to inhibit movement of the front pairs of wheels. The brake system 10 will be described in more detail later on with reference to Figure 9.

The chassis 2 is configured to receive two electric power sources 3. The generally rectangular chassis frame 20 comprises two recesses 22 at opposite sides of the chassis 2, such that the chassis frame 20 generally forms an H-shape. The two opposing recesses 22 are substantially identical and each recess 22 is configured to receive an electric power source 3. As such, each recess 22 forms an electric power source receiving portion of the chassis 2.

The electric power sources 3 are identical, such that either electric power source 3 may be installed in either recess 22 of the chassis frame 20. Each electric power source 3 comprises an array 37 of eight sealed absorbent glass mat (AGM) batteries connected together to form an electric power source with a capacity of about 610 Ah. The array 36 of batteries are held in a drawer 30 that is configured to be slidably received in the recesses 22. Each drawer 30 is laterally insertable into a recess 22 at a side of the chassis 2, and each drawer 30 is laterally removable from a recess 22 at a side of the chassis 2.

It will be appreciated that other types, numbers and arrangements of batteries may be used. For example, an array of eight lithium-ion batteries may be provided. Due to the higher energy density of lithium-ion batteries to AGM batteries, the capacity of the lithium-ion battery array may be about 800 Ah. The main constraint on the type, number and arrangement of the batteries in the array is the size of the drawer 30.

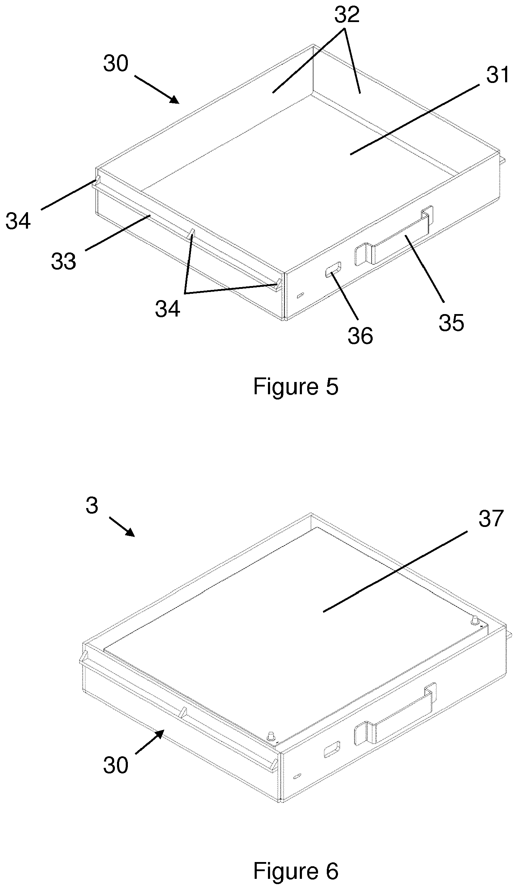

As shown in Figures 5 and 6, each drawer 30 comprises a base 31 and sidewalls 32 defining a substantially cuboid storage volume with a length of about 1000 mm, a width of about 900 mm and a height of about 200 mm. Each array 37 of batteries fits within the storage volumes of the drawers 30. Each drawer 30 further comprises rails 33 along both sides of the drawer 30, extending substantially the length of the drawer. Triangular braces 34 are provided at the upper edge of the rails 33 and are spaced along the length of the rail to provide additional support to the rails 33. The front of each drawer 30 is provided with a handle 35 to help a user to move the drawer and an aperture 36 for an electrical connector (not shown) for electrically connecting the electrical power source 3 to the temperature control system 8 of the dolly.

Each drawer 30 is slidably receivable in the recesses 22 of the chassis 2. Each recess 22 of the chassis 2 comprises a plurality of rollers 26 spaced along both sides, and a pair of springs 28 at the end of the recess 22. Each recess 22 has a width substantially equal to the width of the drawers 30 and a length substantially equal to the length of the drawers 30. As such, a drawer 30 may be received in a recess 22 with a close fit, and when the back of the drawer 30 is close to the end of the recess 22, the front of the drawer 30 is substantially flush with the side of the chassis 20.

As one of the drawers 30 is received in one of the recesses 22, the rails 33 on both sides of the drawer 30 are received on the rollers 26 on both sides of the recess 22. The rollers 26 support the weight of the drawer 30, via the rails 33, and rotate as the drawer 30 is pushed into the recess 22, which facilitates sliding of the drawer 30 into the recess 22. As the back of the drawer 30 approaches the end of the recess 22, the back of the drawer 30 meets the pair of springs 28, which provide resistance to further inward sliding of the drawer 30. The springs 28 prevent the drawer 30 from a harsh impact with the end of the recess 22.

Sliding lock bolts (not shown) are provided on the outer sides of the chassis frame 20, at both sides of the recesses 22. When the drawer 30 is fully received in the recess 22, and the front of the drawer 30 is substantially flush with the outer side of the chassis frame 20, the lock bolts on both sides of the recess 22 may be slid over the front of the drawer 30 to secure the drawer 30 in the recess 22.

The pair of springs 28 at the back of the recess may be partially compressed when
the drawer 30 is fully received in the recess 22. With the pair of springs 28 are compressed when the drawer 30 is fully received in the recess 22, the springs 28 provide a positive force against the back of the drawer 30 that urges the front of the drawer 30 against the lock bolts. This may help to keep the drawer 30 firmly in place in the recess 22, such that movement of the dolly 1 does not disturb the drawer 30 or the array 37 of batteries in the drawer 30.

To remove the drawer 30 from the recess 22, the lock bolts (not shown) on both sides of the recess 22 are slid away from the front of the drawer 30 and the drawer is pulled out of the recess 22 by a user pulling on the handle 35. The pair of springs 28 generally push the drawer 30 out of the recess 22, and as such, the pair of springs 28 provide initial help to a user removing the drawer 30 from the recess 22.

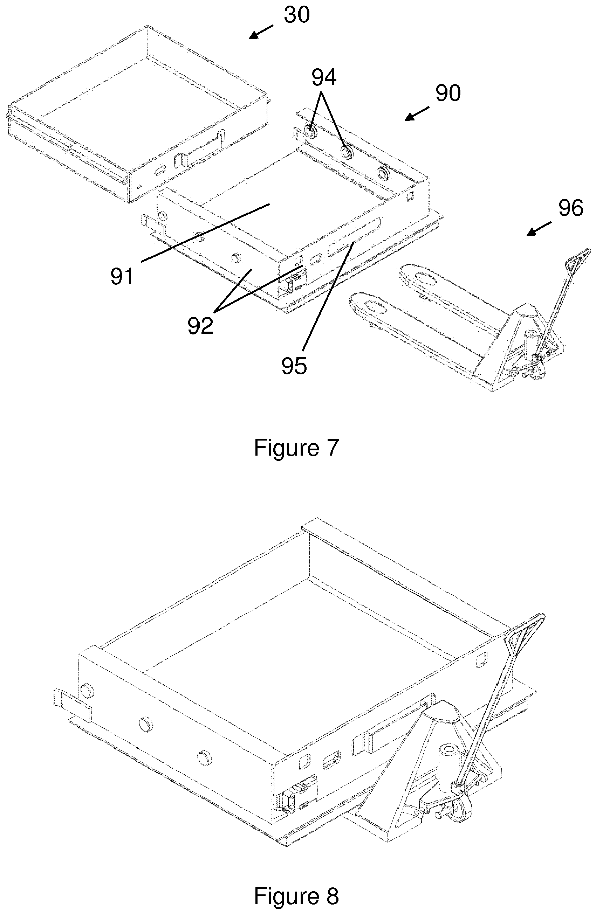

As shown in Figures 7 and 8, custom apparatus 90 may be provided for removal and installation of electric power sources 3. The custom apparatus 90 comprises a frame for receiving a drawer 30. The frame comprises a base 91 and three sidewalls 92 forming a space that is substantially similar to the recesses 22 in the chassis. The sidewalls of the frame comprise rollers 94 for supporting the rails 33 of the drawer. The back wall of the frame comprises an aperture 95 for receiving the handle 35 of the drawer 30. The custom apparatus is designed to be lifted by a conventional fork lift device 96.

The custom apparatus 90 enables an electric power source 3 to be continuously supported as it is removed from the chassis 2. The apparatus 90 may be positioned in front of an electric power source 3 in the chassis 2 using the fork lift device 96. The lock bolts in front of the drawer 30 may be released, and the drawer 30 may be slid out of the recess 22 and into the apparatus 90 using the handle 35. The rails 33 may be supported by both the rollers 26 in the recess 22 and the rollers 94 of the apparatus 90 until the drawer 30 is fully removed from the recess 22 and is fully supported in the apparatus 90. The opposite procedure may be followed to insert an electric power source into a recess 22 of the chassis 2.

A metal base 4 is welded directly over the top of the chassis frame 20. The metal bed 4 comprises a thin sheet of mild steel having a length and a width that is substantially the same as the length and width of the chassis frame 20.

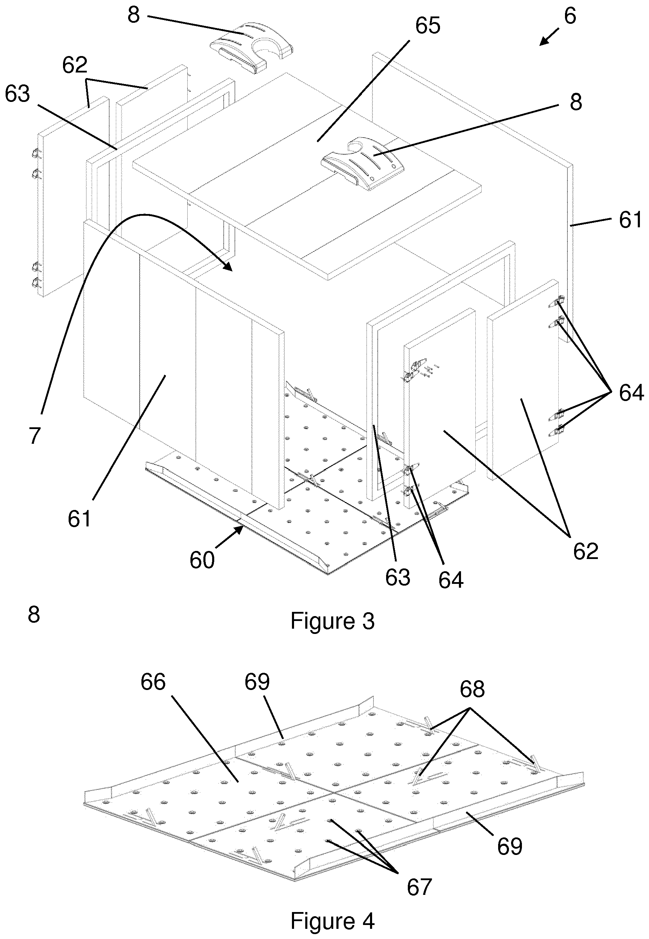

A cargo box 6 is supported on the metal base 4. The cargo box 6 is shown in detail in Figure 3. The cargo box 6 generally comprises a floor 60, a pair of side walls 61, a pair of doors 62 and door frames 63 and a roof 65. The floor 60, side walls 61, doors 62, door frames 63 and roof 65 generally define a cubic storage volume 7.

The floor 60 of the cargo box 6 is secured to the metal bed 4. In this embodiment, the floor 60 of the cargo box 6 is glued to the metal bed 4 using a suitable adhesive. It will be appreciated that in other embodiments, the floor 60 of the cargo box 6 may be secured to the metal bed frame 4 by any other suitable means. It will also be appreciated that in other embodiments, the floor 60 of the cargo box 6 may be secured directly to the chassis frame 20.

The floor 60 is shown in detail in Figure 4. The floor comprises a floor panel 66 having substantially the same length and width as the metal bed 4. Ball transfer units 67 are spaced regularly across the floor panels 66. The ball-transfer units 67 comprise omnidirectional load bearing balls mounted inside a restraining fixture. The ball transfer units 67 provide an omni-directional conveyor which may enable cargo to slide easily over the floor 60 in any direction. In other words, the floor 60 forms a ball transfer table. This may help loading and unloading of the cargo box 6.

It will be appreciated that in some embodiments, the ball-transfer units may be replaced with rollers. It will also be appreciated that in some embodiments, the base 60 may not comprise any bearings or rollers.

The floor 60 further comprises a plurality of mounting points 68 to enable cargo to be secured in the cargo box and skirting 69 extending upwards from the floor panels 66 at both the front and back sides of the floor 60, between both sides. The skirting 69 is flared outwards at both sides to facilitate loading and unloading of the cargo box 6.

Side panels 61 define the front and back sides of the cargo box 6. Each side panel 61 is substantially identical and has a thickness of about 12 cm. Each side panel 61 comprises an aluminium external panel and one or more internal insulation panels. The side panels 61 are welded at their lower edge to the metal bed 4 and additional metal skirting (not shown) is welded over the join between the side panels 61 and the metal bed 4 to reinforce the join.

Doors 62 define the sides of the cargo box 6. Each side of the cargo box 6 is provided with a pair of doors 62 hinged to a door frame 63. The door frames 63 are welded at their lower edge to the metal base 4 and are joined at their sides to the side panels 61 by cam locks (not shown). The hinges 64 attaching the doors 62 to the door frames 63 have an opening angle of 270 degrees and are lockable. The doors have a similar construction to the side panels 61.

PVC curtains (not shown) hang from the door frames 63 inside the storage volume 7. The PVC curtains help to prevent a rush of ambient air from entering the storage volume 7 when the doors 62 are opened.

A roof panel 65 is provided over the side panels 61 and door frames 63 to provide a sealed storage volume 7. The roof panel 65 is substantially identical to the side panels 61 and is secured to the upper edges of the side panels 61 and door frames 63 by cam locks (not shown).

An electric temperature control system 8 is also provided for sensing and controlling the temperature of the storage volume 7 in the cargo box 6.

The electric temperature control system 8 comprises two electric cooling units arranged on the roof 65 of the cargo box 6. Each cooling unit comprises an evaporator, a condenser and a compressor (not shown). Each cooling unit also comprises one low powered fan (not shown) arranged to blow air over the evaporator for circulation in the storage volume, and two additional low power fans (not shown) to improve the efficiency of the condenser and the compressor and to reduce undesirable performance changes caused by the ambient temperature.

Each electric cooling unit comprises a temperature sensor (not shown) for sensing the temperature of intake air at the evaporator unit. This temperature sensor is used to determine the temperature of the storage volume 7. Each unit also comprises two additional temperature sensors (not shown), one temperature sensor for measuring the temperature of the condenser unit and one temperature sensor at the compressor. The temperature sensor at the compressor may be used to monitor for overheating of the compressor.

Each cooling unit is electrically connected to the electric power sources 3 via wires running along the inner surfaces of the roof and sidewalls and through tracks in the chassis.

A control unit (not shown) is provided on the back sidewall 61 of the cargo box 6. The control unit may control the supply of power from the electric power sources 3 to the electric cooling units based on the measurements of temperature of the storage volume 7. The control unit comprises a display for displaying information about the storage volume, such as current temperature, and a user interface to enable a user to manually control the temperature of the storage volume 7. For example, the user may set a desired temperature for the storage volume 7 and the control unit may operate the electric cooling units to adjust the temperature of the storage volume 7 accordingly.

The control unit of the electric temperature control system 8 may enable the cooling units to be operated in different modes. For example, the control unit may be configured to enable the electric cooling units to operate in a high power mode to provide rapid cooling, and a low power mode to provide maintenance of the current temperature for extended periods of time. The control unit may also enable the electric cooling units to operate in a defrosting mode, providing warm air to the storage volume 7 to raise the temperature of the storage volume 7 if the temperature drops below the desired temperature. The control unit enables a user to change the operating mode of the cooling units. In some embodiments, the control unit may automatically control the mode of operation of the cooling units based on a number of predetermined criteria.

The control unit is configured to initiate supplying power to each of the cooling units in a soft starting procedure. The soft starting procedure comprises limiting the current drawn by the compressor for a limited period of time from start-up. This may protect the electric power sources 3 from a high current surge that may drain the charge of the electric power sources 3 faster than necessary.

In some embodiments, the doors 62 may be provided with door sensors for sensing when the doors are open and closed. The control unit may be configured to determine when one of the doors 62 is open and may operate the cooling unit at the opposite side of the cargo box 6 so that the fan directs cold air towards the open door 62. This may help to reduce a rush of ambient air into the storage volume 7 when a door 62 of the cargo box 6 is opened.

The characteristics of the electric power sources 3 may be selected based on the demands of the electric cooling units. In other words, the characteristics of the electric power sources 3 may be selected based on the total continuous running time that they can provide to the electric cooling units. In this embodiment, the electric power sources 3 are able to provide about 8 hours of continuous operation of the cooling units without requiring recharging or replacement.

The brake system 10 of the dolly is shown in detail in Figure 9. The brake system 10 comprises a transverse member 102 formed of a mild steel tube. The transverse member 102 has a length substantially similar to the length of the chassis frame 20. Brake arms 104 are provided at either end of the transverse member 102 and comprise strips of steel bent at the ends into a U-shapes and welded at the ends to the transverse member 102. The transverse member 102 is rotatably secured to the chassis at several pivot points 106 spaced along the length of the transverse member 102. The transverse member 102 is arranged such that the brake arms 104 are aligned with the back wheels 21 of the chassis 2 and such that when the transverse member 102 is rotated about its axis in one direction, the brake arms come into contact with the back wheels 21, inhibiting movement of the back wheels 21. When the transverse member 102 is rotated about its axis in the other, opposite direction, the brake arms 104 move out of contact with the back wheels 21 and allow the back wheels 21 to rotate freely.

A lever arm 114 is provided at the front of the dolly 1 for controlling rotation of the transverse member 102, and consequently, controlling the brake system 10 of the dolly 1. The distal end of the lever arm comprises an eye for coupling the dolly 1 to a tow vehicle. The lever arm 114 is pivoted at its proximal end at a cradle 116. The cradle 116 is secured to a frame member at the front of the chassis frame 20. A protrusion at the distal end of the lever arm 114 extends substantially perpendicular to the lever arm, and is rotatably connected to an end of a transfer member 112.

The lever arm 114 is connected to the transverse member 102 by a longitudinal member 108. The longitudinal member 108 extends substantially perpendicular to the transverse member 102. One end of the longitudinal member 108 is rotatably connected to the transverse member 102 at a protrusion at a central portion of the transverse member 102 that is radially spaced from the axis of the transverse member 102. As such, movement of the longitudinal member 108 substantially along its axis causes the transverse member 102 to rotate. The other end of the longitudinal member 108 is rotatably connected to a central portion of the transfer member 112.

Rotation of the lever arm 114 about its pivot causes the longitudinal member 108 to move in an arc on a plane that is substantially parallel with its axis. This movement of the longitudinal member 108 causes the transverse member 102 to rotate about its axis. If the lever arm 114 is pulled upwards, the transverse member 102 is rotated in the direction to bring the brake arms into contact with the back wheels 21. If the lever arm 114 is pulled downwards, the transverse member 102 is rotated in the direction to bring the brake arms out of contact with the back wheels 21. As such, the brake system 10 may be applied by pulling the lever arm 114 upwards and the brake system 10 may be released by pulled in the lever arm 114 downwards. The longitudinal member 108 is telescopic and comprises an internal spring that biases the longitudinal member 108 into an extended state. In the extended state, the lever arm 114 is pulled upwards into the braking position. Thus, the brake system 10 is biased to apply the brake system 10 unless an external force is applied to the brake lever 114. When a towing vehicle is coupled to the lever arm 114, the lever arm is pulled downwards and the brake system 10 is released.

It will be appreciated that the example described herein is a straightforward example, and that modifications may be made to the illustrated drainage system to provide different functionality. It will be appreciated that features described herein with reference to the described embodiment may be applied to other embodiments without departing from the scope of the invention.

Example or preferred embodiments of the invention may be described with reference to the following numbered clauses:
1. A dolly for carrying temperature sensitive cargo, the dolly comprising:
   a chassis having at least one electric power source receiving portion for receiving an electric power source;
   a cargo box supported on the chassis, the cargo box comprising a storage volume configured to hold cargo; and
   an electric temperature control system configured to control the temperature of the storage volume, the electric temperature control system being configured to be electrically connected to an electrical power source received in an electrical power source receiving portion of the chassis.
2. A dolly according to clause 1, wherein the cargo box is supported on the chassis above the at least one electric power source receiving portion.
3. A dolly according to clause 1 or 2, wherein the chassis has a length and a width and wherein the cargo box extends substantially the length and the width of the chassis.
4. A dolly according to clauses 1, 2 or 3, wherein an electric power source is removably received in each electric power source receiving portion.
5. A dolly according to clause 4, wherein each electric power source is removable laterally from a side of the chassis.
6. A dolly according to clauses 4 or 5, wherein each electric power source comprises one or more electric batteries.
7. A dolly according to any preceding clause, wherein the cargo box comprises a floor, a roof, sidewalls extending between the floor and the roof and at least one door, the floor, the roof, the sidewalls and the at least one door defining the storage volume.
8. A dolly according to clause 7, wherein the floor of the cargo box is secured to the chassis.
9. A dolly according to clause 7, wherein the dolly further comprises a base plate between the chassis and the floor of the cargo box, the base plate being secured to the chassis and the floor of the cargo box being secured to the base plate.
10. A dolly according to any one of clauses 7, 8 and 9, wherein at least a portion of an external surface of the cargo box is coated with a thermally insulating coating.
11. A dolly according to clause 10, wherein at least a portion of an external surface of the roof is coating with a thermally insulating coating.
12. A dolly according to clauses 10 or 11, wherein at least a portion of an external surface of the floor is coated with a thermally insulating coating.
13. A dolly according to any one of clauses 7 to 12, wherein the electric temperature control system comprises at least one electric cooling device arranged on the roof of the cargo box, the at least one electric cooling device being configured to be electrically connected to an electrical power source received in an electrical power source receiving portion of the chassis.
14. A dolly according to clause 13, wherein the electric temperature control system further comprises control electronics, the control electronics being configured to control the supply of power to the at least one electric cooling device from an electric power source received in an electric power source receiving portion of the chassis.
15. A dolly according to clause 14, wherein the control electronics are arranged at a side wall of the cargo box.
16. A dolly according to any one of clauses 13 to 15, wherein the electric temperature control system further comprises one or more door sensors arranged to sense whether a door of the cargo box is open or closed.
17. A dolly according to any one of clauses 13 to 16, wherein the electric temperature control system comprises one or more temperature sensors arranged to sense the temperature of the storage volume.
18. A dolly according to clause 17, wherein the control electronics are further configured to:
   compare measurements of temperature sensed by the temperature sensors to a threshold temperature value; and
   control the supply of power to the at least one electric cooling device based on the comparison.
19. A dolly according to clause 18, wherein the control electronics are configured to supply power to the at least one electric cooling device or increase the supply of power to the at least one electric cooling device if the temperature sensed by the temperature sensors is above the threshold temperature value.
20. A dolly according to any one of clauses 13 to 19, wherein:
   the cargo box comprises at least two doors, a first door arranged at a first side of the cargo box and a second door arranged at a second side of the cargo box, opposite the first side; and
   the temperature control system comprises at least two electric cooling devices arranged on the roof of the cargo box, a first cooling unit arranged at the first side of the cargo box and a second cooling device arranged at the second side of the cargo box.
21. A dolly according to clause 20, wherein:
   the first cooling device comprises a fan arranged to direct cold air towards the second door at the second side of the cargo box;
   the second cooling device comprises a fan arranged to direct cold air towards the first door at the first side of the cargo box; and
   the temperature control system is configured to:
      detect when the first door is opened and operate the second cooling device when the first door is opened to direct cold air towards the open first door;
      and
      detect when the second door is opened and operate the first cooling device when the second door is opened to direct cold air towards the open second door.
22. A dolly according to clause 20, wherein:
   the first cooling device comprises a fan arranged to direct cold air substantially downwards towards the floor;
   the second cooling device comprises a fan arranged to direct cold air substantially downwards towards the floor;
   the temperature control system is configured to:
      detect when the first door is opened and operate the first cooling device when the first door is opened to direct cold air downwards towards the floor to generate a curtain of cold air adjacent the open first door; and
      detect when the second door is opened and operate the second cooling device when the second door is opened to direct cold air downwards towards the floor to generate a curtain of cold air adjacent the open second door.
23. A dolly according to any one of clauses 13 to 22, wherein at least one electric cooling device comprises a cooling element.
24. A dolly according to clause 23, wherein the cooling element is an evaporator.
25. A dolly according to any one of clauses 13 to 24, wherein at least one electric cooling device comprises a refrigerant circuit.
26. A dolly according to clause 25, wherein the refrigerant circuit comprises an evaporator, a condenser, a compressor and an expansion device connected together in a circuit.
27. A dolly according to clause 23, wherein the cooling element is a thermoelectric device.
28. A dolly according to any preceding clause, wherein the chassis comprises one electrical power source receiving portion.
29. A dolly according to clause 28, wherein the dolly comprises an electrical power source received in the electric power source receiving portion of the chassis.
30. A dolly according to any one of clauses 1 to 27, wherein the dolly comprises two electric power source receiving portions, a first electric power source receiving portion arranged at a first side of the chassis and a second electric power source receiving portion arranged at a second side of the chassis, opposite the first side.
31. A dolly according to clause 30, wherein the dolly further comprises two electrical power sources, a first electrical power source received in the first electric power source receiving portion of the chassis and a second electric power source received in the second electric power source receiving portion of the chassis.
32. A dolly according to clause 31, wherein the first electrical power source is removably received in the first electric power source receiving portion and the second electric power source removably received in the second electric power source receiving portion, the first electrical power source being removable laterally from the first side of the chassis and the second electrical power source being removable laterally from the second side of the chassis
33. A dolly according to any preceding clause, wherein the chassis is supported on a plurality of wheels.
34. A dolly according to clause 33, wherein the wheels are caster wheels.
35. A dolly according to clauses 33 or 34, wherein the chassis is substantially rectangular and a pair of wheels is arranged at each corner of the chassis.
36. A dolly according to any one of clauses 33 to 35, wherein the dolly further comprises a brake system, the brake system being engagable with at least one of the plurality of wheels for inhibiting movement of the wheel.
37. A dolly for carrying cargo, the dolly comprising:
   a chassis supported on a pair of wheels; and
   a brake system, the brake system comprising:
      a transverse member having brake arms at both ends, wherein the transverse member extends between the pair of wheels such that a brake arm is aligned with each wheel, and the transverse member is rotatably mounted to the chassis such that rotation of the transverse member in one direction moves the brake arms into contact with the wheels to provide braking to the wheels and rotation of the transverse member in the opposite direction moves the brake arms out of contact with the wheels to enable the wheels to rotate freely;
      a lever arm rotatably coupled to the chassis; and
      a longitudinal member rotationally coupled to the transverse member at one end and rotationally coupled to the lever arm at the other end,
   wherein rotation of the lever arm in a first direction rotates the transverse member to bring the brake arms into contact with the wheels and rotation of the lever arm in a second direction rotates the transverse member to move the brake arms out of contact with the wheels.

## Claims

1. A dolly for carrying temperature sensitive cargo, the dolly comprising:
a chassis having at least one electric power source receiving portion for receiving an electric power source;
a cargo box supported on the chassis, the cargo box comprising a storage volume configured to hold cargo; and
an electric temperature control system configured to control the temperature of the storage volume, the electric temperature control system being configured to be electrically connected to an electrical power source received in an electrical power source receiving portion of the chassis.

2. A dolly according to claim 1, wherein the cargo box is supported on the chassis above the at least one electric power source receiving portion.

3. A dolly according to claims 1 or 2, wherein an electric power source is removably received in each electric power source receiving portion.

4. A dolly according to claim 3, wherein each electric power source is removable laterally from a side of the chassis.

5. A dolly according to claims 3 or 4, wherein each electric power source comprises one or more electric batteries.

6. A dolly according to any preceding claim, wherein the cargo box comprises a floor, a roof, sidewalls extending between the floor and the roof and at least one door, the floor, roof, sidewalls and at least one door defining the storage volume.

7. A dolly according to claim 6, wherein the electric temperature control system comprises at least one electric cooling device arranged on the roof of the cargo box, the at least one electric cooling device being configured to be electrically connected to an electrical power source received in an electrical power source receiving portion of the chassis.

8. A dolly according to claim 6, wherein the electric temperature control system further comprises control electronics configured to control the supply of power to the electric cooling device from an electric power source received in an electric power source receiving portion of the chassis.

9. A dolly according to any one of claims 6, 7 and 8, wherein:
the cargo box comprises at least two doors, a first door arranged at a first side of the cargo box and a second door arranged at a second side of the cargo box, opposite the first side; and
the temperature control system comprises at least two electric cooling devices arranged on the roof of the cargo box, a first cooling unit arranged at the first side of the cargo box and a second cooling unit arranged at the second side of the cargo box.

10. A dolly according to claim 9, wherein:
the first cooling unit comprises a fan arranged to direct cold air towards the second door at the second side of the cargo box;
the second cooling unit comprises a fan arranged to direct cold air towards the first door at the first side of the cargo box; and
the temperature control system is configured to:
detect when the first door is opened and operate the second cooling unit when the first door is opened to direct cold air towards the open first door;
and
detect when the second door is opened and operate the first cooling unit when the second door is opened to direct cold air towards the open second door.

11. A dolly according to claim 9, wherein:
the first cooling unit comprises a fan arranged to direct cold air substantially downwards towards the floor;
the second cooling unit comprises a fan arranged to direct cold air substantially downwards towards the floor;
the temperature control system is configured to:
detect when the first door is opened and operate the first cooling unit when the first door is opened to direct cold air downwards towards the floor to generate a curtain of cold air adjacent the open first door; and
detect when the second door is opened and operate the second cooling unit when the second door is opened to direct cold air downwards towards the floor to generate a curtain of cold air adjacent the open second door.

12. A dolly according to any preceding claim, wherein the chassis comprises one electrical power source receiving portion.

13. A dolly according to any one of claims 1 to 11, wherein the dolly comprises two electric power source receiving portions, a first electric power source receiving portion arranged at a first side of the chassis and a second electric power source receiving portion arranged at a second side of the chassis, opposite the first side.

14. A dolly according to claim 13, wherein the dolly further comprises two electrical power sources, a first electrical power source removably received in the first electric power source receiving portion of the chassis and a second electric power source removably received in the second electric power source receiving portion of the chassis, the first electrical power source being removable laterally from the first side of the chassis and the second electrical power source being removable laterally from the second side of the chassis.

15. A dolly according to any preceding claim, wherein the chassis is supported on a plurality of wheels and the dolly further comprises a brake system, the brake system being engagable with at least one of the plurality of wheels for inhibiting movement of the wheel.
